# EUROPEAN PATENT SPECIFICATION

(11) **EP 3 163 658 B1**
(45) Date of publication and mention of the grant of the patent: **19.12.2018**
(21) Application number: 15811574.1
(22) Date of filing: 15.05.2015
(51) Int. Cl.: H01M 4/86, C25B 9/00, C25B 11/03, H01M 8/02, H01M 8/10, H01M 8/16, H01M 8/086, H01M 4/88, H01M 4/92, H01M 8/0247, H01M 8/1018

(54) **GAS DIFFUSION ELECTRODE, ELECTROCHEMICAL DEVICE, AND FUEL CELL**
GASDIFFUSIONSELEKTRODE, ELEKTROCHEMISCHE VORRICHTUNG UND BRENNSTOFFZELLE
ÉLECTRODE DE DIFFUSION DE GAZ, DISPOSITIF ÉLECTROCHIMIQUE, ET PILE À COMBUSTIBLE

(30) Priority: 24.06.2014 JP 2014129378
(43) Date of publication of application: 03.05.2017
(73) Proprietor: Panasonic Corporation, Kadoma-shi, Osaka 571-8501 (JP)
(72) Inventor: KAMAI, Ryo, 7F OBP Panasonic Tower, 1-61, Shiromi 2-chome Chuo-ku, Osaka-shi Osaka 540-6207 (JP); USUI, Hiroaki, 7F OBP Panasonic Tower, 1-61, Shiromi 2-chome Chuo-ku, Osaka-shi Osaka 540-6207 (JP); KITADE, Yuuki, 7F OBP Panasonic Tower, 1-61, Shiromi 2-chome Chuo-ku, Osaka-shi Osaka 540-6207 (JP)
(74) Representative: Müller-Boré & Partner Patentanwälte PartG mbB
(86) International application number: PCT/JP2015/002471
(87) International publication number: WO 2015/198520

(56) References cited:
- WO-A1-01/17047
- WO-A1-2006/043394
- JP-A- 2005 317 240
- JP-A- 2008 270 163
- JP-A- 2010 129 309
- JP-A- 2011 124 019
- US-A- 3 930 094
- US-A1- 2009 136 802

## Description

The present invention relates to a gas diffusion electrode, an electrochemical device including the gas diffusion electrode, and a fuel cell including the gas diffusion electrode.

A conductive porous base material such as carbon paper or carbon cloth is used as the base material for a gas diffusion electrode used as an electrode for an electrochemical device and for a fuel cell. Such a conductive porous base material itself, however, does not generally have water repellency. Accordingly, it is necessary to give the conductive porous base material water repellency.

As a conventional method for giving a gas diffusion electrode water repellency, a porous material of PolyTetraFluoroEthylene (PTFE) is generally formed by coating or impregnating the gas diffusion layer with a PTFE dispersion and sintering the result (for example, see Patent Literature (PTL) 1).

Another method is disclosed in which a water-repellent layer including: fluorine resin such as PTFE; and carbon black is formed on the conductive porous base material (for example, see PTL 2). In particular, a method is disclosed in which strong water repellency is given to a gas diffusion electrode to be immersed in water for use, such as a microbial fuel cell, by performing impregnation and sintering processes of the PTFE multiple times (for example, see Non-Patent Literature (NPL) 1).
US 2009/136802 A1 discloses a solid polymer fuel cell.
JP 2010 129309 A discloses a gas diffusion layer for fuel cell and a manufacturing method thereof.
US 3 930 094 A discloses hydrophobic mats for gas diffusion electrodes.

### Citation List

### Patent Literature

PTL 1: Japanese Unexamined Patent Application Publication No. 2005-93167
PTL 2: Japanese Unexamined Patent Application Publication No. 2002-313359

### Non-Patent Literature

NPL 1: S. Cheng et al./Electrochemistry Communications 8 (2006) pp. 489-494

However, in the method for forming a water-repellent layer including water-repellent resin on the conductive porous base material, the water-repellent layer is likely to have cracks and pinholes. In particular, water leakage is likely to occur when a large-area gas diffusion electrode is immersed into an electrolytic solution.

In order to form a uniform water-repellent layer which prevents such water leakage, high level of uniformity and condition control for drying and sintering processes are necessary, which is problematic in manufacturing.

Moreover, the water-repellent layer has a low flexibility. Hence, warping of the electrode caused by water pressure generates cracks in the water-repellent layer, leading to water leakage. This imposes large constraints in use environments.

The fluorine resin such as PTFE needs to be sintered at high temperature to enhance the uniformity, which causes a problem of high energy cost.

The present invention has been conceived in view of the above. An object of the present invention is to provide: a gas diffusion electrode having gas permeability, and capable of easily exhibiting uniform high water resistance which is unlikely to suffer cracks which can cause water leakage; and an electrochemical device and a fuel cell each including the gas diffusion electrode.

The subject matter of the present invention is characterized in the claims.

In order to solve the problems above, the gas diffusion electrode according to one aspect of the present invention includes: a water-repellent layer consisting of a woven fabric or a non-woven fabric, and having water repellency, the woven fabric and the non-woven fabric each consisting of a fibrous material that is a hydrophobic material; a gas diffusion layer stacked on and bonded to the water-repellent layer; and a catalyst layer disposed opposite the water-repellent layer relative to the gas diffusion layer.

The present invention can be implemented not only as a gas diffusion electrode, but also as an electrochemical device and a fuel cell each including the gas diffusion electrode.

According to the present invention, it is possible to provide, for example, a gas diffusion electrode having gas permeability and capable of exhibiting uniform high water resistance.

### BRIEF DESCRIPTION OF DRAWINGS

FIG. 1 is a diagram illustrating an example of a configuration of a fuel cell according to an embodiment. In FIG. 1, (a) is a top view of the fuel cell, and (b) is a cross-sectional view taken along line A-A' in (a).
FIG. 2 is a graph showing cathode voltammograms for Example and Comparative Example in the embodiment.
FIG. 3 is a cross-sectional view illustrating an example of a structure of cathodes according to Variation 1 of the embodiment.
FIG. 4 is a cross-sectional view illustrating an example of a configuration of a fuel cell according to Variation 2 of the embodiment.

Hereinafter, a gas diffusion electrode and the like according to an embodiment of the present invention will be described with reference to the drawings. It should be noted that the subsequently-described embodiment shows a specific example of the present invention. The numerical values, shapes, materials, structural components, the arrangement and connection of the structural components, etc. shown in the following embodiment are mere examples, and are not intended to limit the present invention. Among the structural components in the following embodiment, components not recited in any one of the independent claims which indicate the broadest concepts of the present invention are described as arbitrary structural components.

### (Embodiment)

### [1. Configuration of Fuel Cell]

In general, a fuel cell is a primary cell capable of discharging electricity. Examples of the fuel cell include: a hydrogen fuel cell such as a polymer electrolyte fuel cell (PEFC) and a phosphoric acid fuel cell (PAFC); and a microbial fuel cell (MFC).

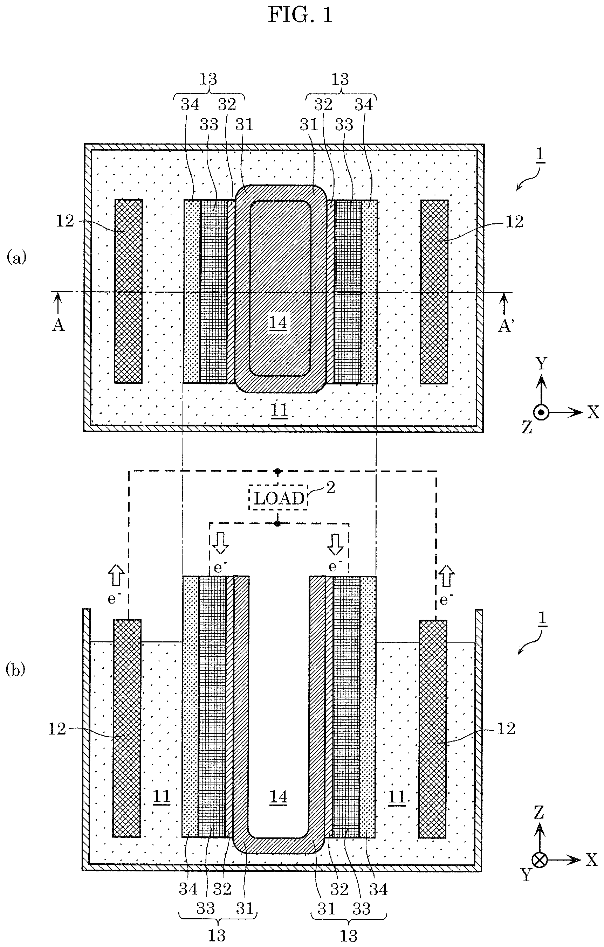

Hereinafter, a fuel cell according to the present embodiment will be described with reference to FIG. 1. FIG. 1 is a diagram illustrating an example of a configuration of fuel cell 1 according to the present embodiment. In FIG. 1, (a) is a top view of fuel cell 1, and (b) is a cross-sectional view taken along line A-A' in (a). FIG. 1 also illustrates load 2 to which current is supplied when connected to fuel cell 1.

As illustrated in FIG. 1, fuel cell 1 according to the present embodiment is, for example, an MFC which includes electrolytic solution 11 which is an electrolyte material, anodes 12 each are an electrode from which electrons flow into load 2 by oxygen evolution reaction, and cathodes 13 each are an electrode into which the electrons from load 2 flow by oxygen reduction reaction. Fuel cell 1 according to the present embodiment includes two sets of opposing anode 12 and cathode 13. However, the number of sets is not limited to two, and may be one or more sets. Anode 12 is also referred to as a negative electrode or a minus electrode, and cathode 13 is also referred to as a positive electrode or a plus electrode.

Hereinafter, in the present embodiment, each cathode 13 is described as a gas diffusion electrode for rapidly supplying reactive gas such as oxygen in the air.

### [2. Structure of Gas Diffusion Electrode (Cathode)]

Next, a structure of each of the gas diffusion electrodes (cathodes 13) will be described in detail.

Cathode 13 is, for example, immersed into electrolytic solution 11 such as water containing an organic material. As illustrated in FIG. 1, cathode 13 includes water-repellent layer 31, adhesive layer 32, gas diffusion layer 33, and catalyst layer 34.

### [2-1. Water-Repellent Layer]

Water-repellent layer 31 consists of a woven fabric or a non-woven fabric and has water repellency. Here, the woven fabric or the non-woven fabric refers to a sheet material including a fibrous material, that is, a fiber cloth. Specifically, the woven fabric refers to a configuration of a cloth made by weaving or knitting thread obtained by twisting a fibrous material, and the non-woven fabric refers to a configuration of a cloth made by bonding or intertangling a fibrous material by thermal, mechanical, or chemical action.

Examples of the material for water-repellent layer 31 include: a fluorine-based polymer material such as polytetrafluoroethylene (PTFE), polyvinylidene fluoride (PVDF), polyhexafluoropropylene, and tetrafluoroethylene-hexafluoropropylene copolymer (FEP); polypropylene; and polyethylene.

In other words, water repellency is given to water-repellent layer 31 by water-repellent layer 31 consisting of a woven fabric or a non-woven fabric consisting of a fibrous material which is a hydrophobic material. The water repellency refers to a property of repelling water. Note that the "water" here includes not only water or a water-soluble liquid, but also includes a polar organic liquid such as a short-chain alcohol, like oil.

In the present embodiment, water-repellent layer 31 has a bag shape. Specifically, water-repellent layer 31 has a bag shape having no opening at the position which is immersed into electrolytic solution 11, and having an opening at the position which is not immersed into electrolytic solution 11. This can reduce leakage of electrolytic solution 11 to air layer 14 which is the internal space of bag-shaped water-repellent layer 31.

The method for forming water-repellent layer 31 in a bag shape is not particularly limited. For example, a woven fabric or a non-woven fabric itself may be formed in a bag shape, or portions of a woven fabric or a non-woven fabric formed in a planar shape may be bonded to form a bag shape.

However, bag-shaped water-repellent layer 31 formed by sewing up the woven fabric or the non-woven fabric may allow electrolytic solution 11 to leak through the seams penetrating water-repellent layer 31. Hence, in order to reduce the leakage of electrolytic solution 11 to air layer 14, water-repellent layer 31 may be formed in a bag shape without sewing up the woven fabric or the non-woven fabric. Even if bag-shaped water-repellent layer 31 formed by sewing up the woven fabric or the non-woven fabric, the leakage can be reduced by sealing the seams with resin or the like.

Here, examples of the method for bonding portions of a planar shaped woven fabric or non-woven fabric include fusion bonding and bonding using resin or the like. In this case, from the viewpoint of durability, fusion bonding may be used.

In general, the woven fabric or non-woven fabric of water-repellent layer 31 may be, for example, coated, or impregnated with a water-repellency aid. This further enhances water repellency of water- repellent layer 31. Accordingly, the leakage of electrolytic solution 11 to air layer 14 can be further reduced.

Examples of the water-repellent aid include: a fluorine-based polymer material; and a silicone-based polymer material such as polydimethylsiloxane (PDMS).

### [2-2. Adhesive layer]

Adhesive layer 32 has oxygen permeability, and bonds water-repellent layer 31 and gas diffusion layer 33. Adhesive layer 32 can have oxygen permeability if at least one of the following two conditions is satisfied: (i) adhesive layer 32 has voids, and (ii) adhesive layer 32 includes a material having oxygen permeability.

Examples of the material having oxygen permeability include a material having a high oxygen permeability, such as silicone resin, natural rubber, low density polyethylene, polystyrene, polypropylene, polycarbonate, and polyvinyl acetate.

When adhesive layer 32 has voids, the material used for adhesive layer 32 is not particularly limited as long as water-repellent layer 31 and gas diffusion layer 33 can be fixed.

### [2-3. Gas Diffusion Layer]

Gas diffusion layer 33 includes a conductive porous base material, and is stacked on and bonded to water-repellent layer 31 via adhesive layer 32.

Examples of the material for gas diffusion layer 33 include: a non-woven fabric of carbon fibers such as carbon paper and carbon cloth; and a porous material for a metal such as SUS304 (18Cr-8Ni) and SUS316 (18Cr-12Ni-2.5Mo).

The form of gas diffusion layer 33 is not particularly limited as long as the electrode catalyst included in catalyst layer 34 can be supported on the surface of gas diffusion layer 33. From the viewpoint of enhancing catalytic activity per unit mass (mass activity) of cathode 13, gas diffusion layer 33 may be in a fiber form with a large specific surface area per unit mass. This is because a greater specific surface area of gas diffusion layer 33 can generally ensure a greater support area and enhance dispersibility of catalytic components on a surface of gas diffusion layer 33, and therefore gas diffusion layer 33 with such a greater specific area can support a greater amount of the electrode catalyst on the surface of gas diffusion layer 33. Therefore, a non-woven fabric of carbon fibers such as carbon paper or carbon cloth is a suitable form of gas diffusion layer 33.

Gas diffusion layer 33 may include a part serving as a connection terminal to be connected to a conductive wire for interconnecting the electrode of fuel cell 1 and an external circuit such as load 2.

### [2-4. Catalyst Layer]

Catalyst layer 34 includes an electrode catalyst having a desired reaction activity, and a binder for binding the electrode catalyst to gas diffusion layer 33. Catalyst layer 34 is disposed opposite water-repellent layer 31 relative to gas diffusion layer 33. That is, water-repellent layer 31, gas diffusion layer 33, and catalyst layer 34 are layered in this order. In other words, water-repellent layer 31, gas diffusion layer 33, and catalyst layer 34 are stacked in this order.

In this embodiment, catalyst layer 34 is disposed on the outer side of bag-shaped water-repellent layer 31. That is, catalyst layer 34 is disposed in the space outside the space surrounded by water-repellent layer 31. In other words, catalyst layer 34 is disposed on the outer surface side of water-repellent layer 31. Accordingly, in the present embodiment, gas diffusion layer 33 is disposed on the outer side of water-repellent layer 31, and catalyst layer 34 is disposed on the outer side of gas diffusion layer 33.

An oxygen reduction catalyst is used as the electrode catalyst included in catalyst layer 34, when particularly used in fuel cell 1. Well known examples of the oxygen reduction catalyst include a platinum group catalyst such as platinum, palladium, rhodium, ruthenium and iridium each supported on activated carbon.

Moreover, as the binder included in catalyst layer 34, for example, an ion conductive resin is used. The ion conductive resin is not particularly limited, but conventionally known knowledge may be appropriately referred to. The ion conductive resin is roughly classified into fluorine-based polymer electrolytes and hydrocarbon-based polymer electrolytes, depending on the kind of the ion-exchange resin used for the ion conductive resin.

Examples of the ion exchange resin that composes the fluorine-based polymer electrolyte include: a perfluorocarbon sulfonic acid polymer such as Nafion (manufactured by E. I. du Pont de Nemours and Company), Aciplex (manufactured by Asahi Kasei Chemicals Corporation) and Flemion (manufactured by Asahi Glass Co., Ltd.); a perfluorocarbon phosphonic acid polymer; a trifluorostyrene sulfonic acid polymer; an ethylene tetrafluoroethylene-g-styrene sulfonic acid polymer; an ethylene-tetrafluoroethylene copolymer; and a polyvinylidene fluoride-perfluorocarbon sulfonic acid polymer.

Examples of the ion exchange resin that composes the hydrocarbon-based polymer electrolyte include: an aromatic polymer such as a polyphenylene sulfonic acid; a polyester sulfonic acid; a polyimide sulfonic acid; and a polystyrene sulfonic acid.

### [2-5. Air Layer]

The thickness of air layer 14 in FIG. 1 needs to be appropriately adjusted depending on the desired current density and the depth of the immersion of cathode 13 into the electrolytic solution. In the case where the current density is high, or the depth of immersion of cathode 13 into the electrolytic solution is large, the thickness of air layer 14 needs to be increased so that the relation of (the rate of oxygen diffusion) ≥ (the rate of oxygen consumption by oxygen reduction reaction) is satisfied. In other words, it is necessary to increase the size of air layer 14 in X and Y directions in FIG. 1.

Note that the above does not apply to the case where a system for supplying air to air layer 14 is disposed. In other words, in the case where such a system is disposed, oxygen necessary for oxygen reduction reaction at cathode 13 can be supplied even if air layer 14 is thin.

As described above, each cathode 13 according to the present embodiment includes: water-repellent layer 31 including a woven fabric or a non-woven fabric and having water repellency; gas diffusion layer 33 stacked on water-repellent layer 31; and catalyst layer 34 disposed opposite water-repellent layer 31 relative to gas diffusion layer 33.

Accordingly, cathode 13 can have oxygen permeability, and exhibit uniform high water resistance.

Next, the evaluation tests conducted to evaluate the performance of cathode 13 according to the present embodiment will be described.

### (Example)

First, a specific example of cathode 13 according to the present embodiment will be described.

A polyethylene non-woven fabric (Tyvek 1073B manufactured by E. I. du Pont de Nemours and Company) was used as water-repellent layer 31. A silicone adhesive (KE-3475 manufactured by Shin-Etsu Chemical Co., Ltd) was used as adhesive layer 32. Carbon paper (TGP-H-120, no Teflon (registered trademark) treatment, manufactured by Toray Industries, Inc.) was used as gas diffusion layer 33. A catalyst ink was prepared including platinum supported catalyst (TEC10E70TPM, manufactured by Tanaka Kikinzoku Kogyo K.K.) and Aciplex at solid content ratio of 1 : 0.8, and a layer having the amount of supported platinum of 0.5mg / cm^2 was formed as catalyst layer 34.

### (Comparative Example)

Next, a comparative example prepared for comparison with Example will be described.

Instead of using water-repellent layer 31, adhesive layer 32, and gas diffusion layer 33 according to Example, a configuration was used where a PTFE water-repellent layer was formed on carbon paper (TGP-H-120) in accordance with NPL 1. The layer same as the layer in Example was formed as a catalyst layer.

### (Oxygen Reduction Activity Evaluation)

Next, the evaluation tests conducted using the cathodes according to the above Example and Comparative Example will be described.

Specifically, Linear Sweep Voltammetry was performed as the evaluation tests by using the cathodes according to the Example and Comparative Example. A 1.0M Tris-HCl buffer solution of pH8.0 was used as the electrolytic solution, and a platinum mesh was used as a counter electrode. Sweep rate was at 10mV/sec.

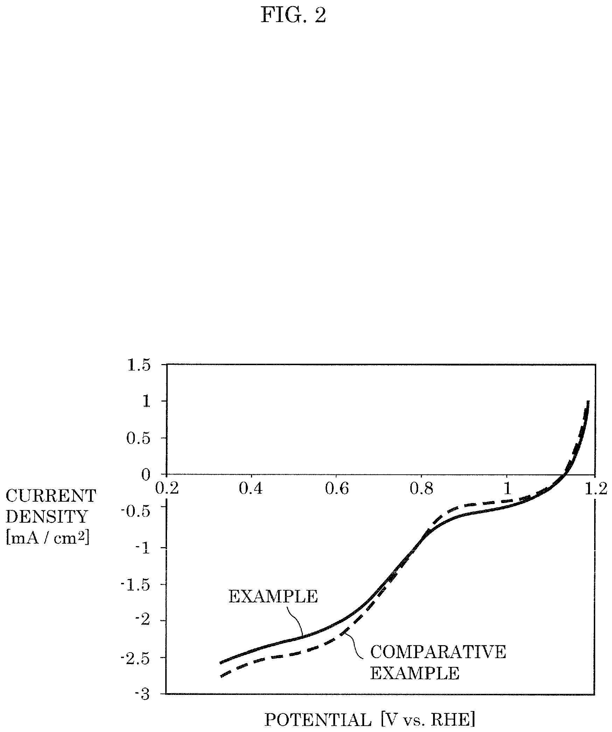

The results of the evaluations are shown in FIG. 2. FIG. 2 is a graph showing cathode voltammograms for Example and Comparative Example of the embodiment.

As shown in FIG. 2, Example has the onset potential and the current density which are substantially the same as those in Comparative Example .

Accordingly, the results of the evaluations confirmed that cathode 13 including: water-repellent layer 31 including a woven fabric or a non-woven fabric and having water repellency; gas diffusion layer 33 stacked on water-repellent layer 31; and catalyst layer 34 disposed opposite water-repellent layer 31 relative to gas diffusion layer 33 can also exhibit approximately the same level of performance as the cathode including fluorine resin such as PTFE.

As described above, cathode 13 according to the embodiment which is an aspect of a gas diffusion electrode includes water-repellent layer 31 consisting of a woven fabric or a non-woven fabric and having water repellency, the woven fabric and the non-woven fabric each consisting of a fibrous material that is a hydrophobic material, gas diffusion layer 33 stacked on and bonded to water-repellent layer 31, and catalyst layer 34 disposed opposite water-repellent layer 31 relative to gas diffusion layer 33.

Here, in the case where a conductive porous base material such as carbon paper or carbon cloth on which a water-repellent layer including water-repellent resin is formed is used as a cathode, warping of the cathode caused by water pressure or the like may cause the conductive porous base material to suffer cracks (including pinholes). Such cracks can cause water leakage to the air layer. In contrast, a woven fabric or a non-woven fabric has a flexibility higher than that of the conductive porous base material. Therefore, even when warping of cathode 13 is caused by water pressure or the like, water-repellent layer 31 according to the present embodiment is unlikely to suffer cracks. Accordingly, cathode 13 according to the present embodiment can ensure high water resistance which is unlikely to suffer cracks which can cause water leakage.

Moreover, uniform thickness of the woven fabric or the non-woven fabric can be easily obtained, and thus, water-repellent layer 31 according to the present embodiment can have uniform water repellency. In other words, cathode 13 according to the present embodiment can easily have high water resistance.

Moreover, according to the present embodiment, cathode 13 can obtain water repellency without thermal treatment, and thus, cathode 13 can have high water resistance with reduced energy cost in manufacturing.

Moreover, according to the present embodiment, since water-repellent layer 31 consists of a woven fabric or a non-woven fabric, cathode 13 can have both high water resistance while having oxygen permeability. In other words, cathode 13 can have both reactive gas permeability, and high water resistance.

Moreover, in the present embodiment, water-repellent layer 31 has a bag-shaped structure.

Moreover, water-repellent layer 31 may be a polyethylene non-woven fabric.

Moreover, in the present embodiment, catalyst layer 34 is disposed on the outer side of bag-shaped water-repellent layer 31.

Accordingly, it is possible to provide fuel cell 1 by immersing cathode 13 into electrolytic solution 11, regardless of the amount of electrolytic solution 11.

Catalyst layer 34 may be disposed on the inner side of bag-shaped water-repellent layer 31. That is, catalyst layer 34 may be disposed in the space surrounded by water-repellent layer 31. In other words, catalyst layer 34 may be disposed on the inner surface side of water-repellent layer 31. For example, in the present embodiment, since cathode 13 including bag-shaped water-repellent layer 31 is immersed into electrolytic solution 11, air layer 14 is positioned on the inner side of water-repellent layer 31, and electrolytic solution 11 is positioned on the outer side of water-repellent layer 31. Therefore, in the present embodiment, catalyst layer 34 is disposed on the outer side of water-repellent layer 31. In contrast, electrolytic solution 11 may be housed in bag-shaped water-repellent layer 31, that is, electrolytic solution 11 may be positioned on the inner side of water-repellent layer 31. In such a configuration, catalyst layer 34 also needs to be positioned on the inner side of water-repellent layer 31. In other words, fuel cell 1 may have a configuration where air layer 14 is disposed on the outer side of water-repellent layer 31, and electrolytic solution 11 is disposed on the inner side of water-repellent layer 31.

In the configuration where catalyst layer 34 is disposed on the inner side of water-repellent layer 31 as described above, adhesive layer 32 and gas diffusion layer 33 are also disposed on the inner side of water-repellent layer 31, like catalyst layer 34. Specifically, adhesive layer 32, gas diffusion layer 33, and catalyst layer 34 are disposed on the inner side of water-repellent layer 31 in this order from water-repellent layer 31 side.

### (Variation 1)

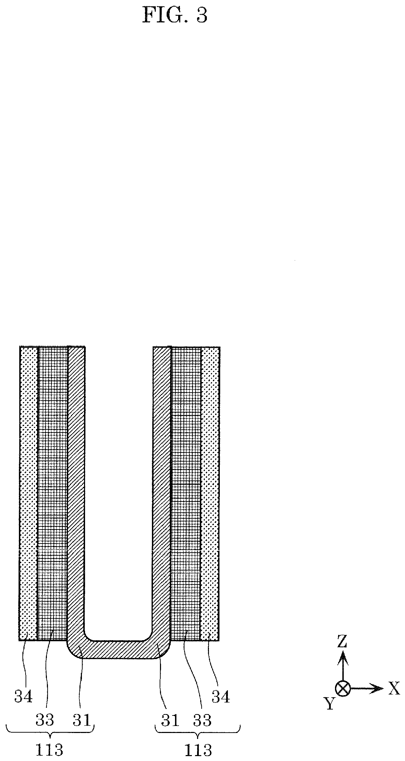

In the above embodiment, cathode 13 includes adhesive layer 32, but the present invention is not limited to such an example. It may be that adhesive layer 32 is not included like cathode 113 illustrated in FIG. 3. FIG. 3 is a cross-sectional view illustrating an example of a structure of cathode 113 (gas diffusion electrode) according to Variation 1 of the embodiment.

As illustrated in FIG. 3, water-repellent layer 31 may be disposed so as to be in contact with gas diffusion layer 33. In this case, water-repellent layer 31 and gas diffusion layer 33 may be bonded, for example, by hot pressing.

Cathode 113 having such a structure also provides the same advantageous effects as the above embodiment. That is, cathode 113 can have gas permeability, and easily exhibit uniform high water resistance.

### (Variation 2)

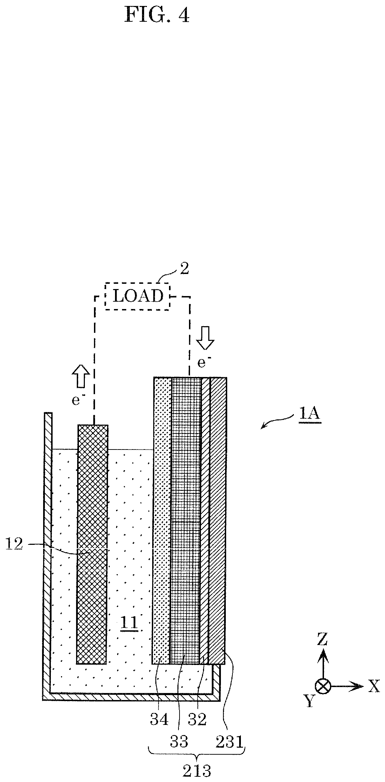

In the above embodiment, water-repellent layer 31 has a bag-shaped structure, but the present invention is not limited to such a structure. For example, the structure of cathode 213 as illustrated in FIG. 4 may be used. FIG. 4 is a cross- sectional view illustrating an example of a configuration of fuel cell 1A according to Variation 2 of the embodiment.

As illustrated in FIG. 4, water-repellent layer 231 may have a substantially planar shape, and an end of water-repellent layer 231 may be bonded to the wall portion housing (surrounding) electrolytic solution 11. Cathode 213 having such a structure also provides the same advantageous effects as the above embodiment. That is, cathode 213 can have gas permeability, and easily exhibit uniform high water resistance.

### (Other Variations)

The cathode according to the embodiment of the present invention and its variations have been described above, but the present invention is not limited to the embodiment and the variations. For example, the embodiment and the variations may be combined.

In the above description, the cathode which is an oxygen reduction electrode has been described as an example of one aspect of the gas diffusion electrode. However, the gas diffusion electrode is not limited to the example. For example, the gas diffusion electrode may be an anode which is an oxygen evolution electrode, an anode which is a fuel electrode, or may be a cathode which is a hydrogen evolution electrode. Examples of a configuration where the gas diffusion electrode is used as an anode include: an oxygen evolution anode and a hydrogen evolution cathode in a water electrolysis device, and an anode in a direct methanol fuel cell (DMFC).

In the above description, the MFC has been given as an example of a fuel cell including a gas diffusion electrode, but such a fuel cell is not limited to the MFC. For example, such a fuel cell may be a hydrogen fuel cell which is a fuel cell which extracts an electrical energy from hydrogen and oxygen by the reverse operation of water electrolysis. Examples of the hydrogen fuel cell include PEFC, PAFC, an alkaline fuel cell (AFC), a molten carbonate fuel cell (MCFC), and a solid oxide fuel cell (SOFC). Here, PEFC is a hydrogen fuel cell including a proton conducting ion exchange membrane as an electrolyte material, and PAFC is a hydrogen fuel cell including phosphoric acid (H₃PO₄) penetrating a matrix layer as an electrolyte material.

The gas diffusion electrode may be used not only as the electrodes such as the anode or the cathode of the fuel cell, but also may be used as electrodes of various electrochemical devices. Examples of such electrochemical devices include a water electrolysis device, a carbon dioxide permeation device, a brine electrolysis device, and a metal-air battery such as a lithium metal-air battery.

In addition, when warping of the gas diffusion electrode is caused by water pressure, for example, a spacer for maintaining the shape of air layer 14 may be inserted to air layer 14. The shape of such a spacer is not particularly limited, but sufficient oxygen needs to be supplied to the water-repellent layer, by, for example, using a porous material or a material with slits.

### REFERENCE MARKS IN THE DRAWINGS

1, 1A fuel cell
13, 113, 213 cathode (gas diffusion electrode)
31, 231 water-repellent layer
33 gas diffusion layer
34 catalyst layer

## Claims

1. A gas diffusion electrode (13, 113, 213) comprising:
a water-repellent layer (31, 231) consisting of either one of a woven fabric and a non-woven fabric, and having water repellency, the woven fabric and the non-woven fabric each consisting of a fibrous material that is a hydrophobic material;
a gas diffusion layer (33) stacked on and bonded to the water-repellent layer (31, 231); and
a catalyst layer (34) disposed opposite the water-repellent layer (31, 231) relative to the gas diffusion layer (33).

2. The gas diffusion electrode (13, 113, 213) according to claim 1, wherein the water-repellent layer (31, 231) has a bag-shaped structure.

3. The gas diffusion electrode (13, 113, 213) according to claim 2, wherein the water-repellent layer (31, 231) is a polyethylene non-woven fabric.

4. The gas diffusion electrode (13, 113, 213) according to one of claim 2 and claim 3,
wherein the catalyst layer (34) is disposed on an outer side of the water-repellent layer (31, 231).

5. The gas diffusion electrode (13, 113, 213) according to any one of claims 1 to 4,
wherein the water-repellent layer (31, 231) is in contact with the gas diffusion layer (33).

6. An electrochemical device comprising the gas diffusion electrode (13, 113, 213) according to any one of claims 1 to 5.

7. A fuel cell (1, 1A) comprising the gas diffusion electrode (13, 113, 213) according to any one of claims 1 to 5.

## Patentansprüche

1. Gasdiffusionselektrode (13, 113, 213), umfassend:
eine wasserabweisende Schicht (31, 231), die entweder aus einem Gewebe oder einem Vlies besteht und wasserabweisende Eigenschaften aufweist, wobei jedes von dem Gewebe und dem Vlies aus einem faserförmigen Material, welches ein hydrophobes Material ist, besteht;
eine Gasdiffusionsschicht (33), die auf der wasserabweisenden Schicht (31, 231) angeordnet und an diese gebunden ist; und
eine Katalysatorschicht (34), die gegenüber der wasserabweisenden Schicht (31, 231), bezogen auf die Gasdiffusionsschicht (33), angeordnet ist.

2. Gasdiffusionselektrode (13, 113, 213) nach Anspruch 1,
wobei die wasserabweisende Schicht (31, 231) eine beutelförmige Struktur aufweist.

3. Gasdiffusionselektrode (13, 113, 213) nach Anspruch 2,
wobei die wasserabweisende Schicht (31, 231) ein Polyethylenvlies ist.

4. Gasdiffusionselektrode (13, 113, 213) nach Anspruch 2 oder 3,
wobei die Katalysatorschicht (34) auf einer äußeren Seite der wasserabweisenden Schicht (31, 231) angeordnet ist.

5. Gasdiffusionselektrode (13, 113, 213) nach einem der Ansprüche 1 bis 4,
wobei sich die wasserabweisende Schicht (31, 231) in Kontakt mit der Diffusionsschicht (33) befindet.

6. Elektrochemische Vorrichtung, umfassend die Gasdiffusionselektrode (13, 113, 213) nach einem der Ansprüche 1 bis 5.

7. Brennstoffzelle (1, 1A), umfassend die Gasdiffusionselektrode (13, 113, 213) nach einem der Ansprüche 1 bis 5.

## Revendications

1. Electrode à diffusion gazeuse (13, 113, 213) comprenant :
une couche hydrofuge (31, 231) constituée de l'un ou l'autre parmi un tissu tissé et un tissu non tissé, et ayant un caractère hydrofuge, le tissu tissé et le tissu non tissé étant chacun constitué d'une matière fibreuse qui est une matière hydrophobe ;
une couche de diffusion gazeuse (33) empilée sur et collée à la couche hydrofuge (31, 231) ; et
une couche de catalyseur (34) disposée à l'opposé de la couche hydrofuge (31, 231) par rapport à la couche de diffusion gazeuse (33).

2. Electrode à diffusion gazeuse (13, 113, 213) selon la revendication 1,
dans laquelle la couche hydrofuge (31, 231) a une structure en forme de sac.

3. Electrode à diffusion gazeuse (13, 113, 213) selon la revendication 2,
dans laquelle la couche hydrofuge (31, 231) est un tissu non tissé en polyéthylène.

4. Electrode à diffusion gazeuse (13, 113, 213) selon une de la revendication 2 et la revendication 3,
dans laquelle la couche de catalyseur (34) est disposée sur un côté externe de la couche hydrofuge (31, 231).

5. Electrode à diffusion gazeuse (13, 113, 213) selon l'une quelconque des revendications 1 à 4,
dans laquelle la couche hydrofuge (31, 231) est en contact avec la couche de diffusion gazeuse (33).

6. Dispositif électrochimique comprenant l'électrode à diffusion gazeuse (13, 113, 213) selon l'une quelconque des revendications 1 à 5.

7. Pile à combustible (1, 1A) comprenant l'électrode à diffusion gazeuse (13, 113, 213) selon l'une quelconque des revendications 1 à 5.
